# EUROPEAN PATENT SPECIFICATION

(11) **EP 2 732 211 B1**
(45) Date of publication and mention of the grant of the patent: **06.04.2016**
(21) Application number: 12750812.5
(22) Date of filing: 04.07.2012
(51) Int. Cl.: F21V 33/00, F21S 2/00, E04F 15/02, E04F 13/14

(54) **MODULAR ILLUMINATING TILE**
MODULARE BELEUCHTUNGSKACHEL
DALLE D'ÉCLAIRAGE MODULAIRE

(30) Priority: 13.07.2011 HU P1100377
(43) Date of publication of application: 21.05.2014
(73) Proprietor: Kiss, Zoltán, 5630 Békés (HU)
(72) Inventor: Kiss, Zoltán, 5630 Békés (HU)
(74) Representative: Harangozo, Gabor
(86) International application number: PCT/IB2012/053414
(87) International publication number: WO 2013/008145

(56) References cited:
- EP-A1- 2 055 849
- WO-A2-2011/036614
- KR-A- 20090 020 447
- US-A1- 2004 031 219
- US-A1- 2005 039 789
- US-A1- 2005 248 935
- US-A1- 2008 037 284
- US-A1- 2009 322 251

## Description

The invention relates to a modular illuminating tile comprising carrier means, at least one illuminating element mounted on the carrier means, means powering the illuminating element, and a protective cover associated with the illuminating element. The proposed illuminating tile can be used primarily as decorative cover at places exposed to weather conditions, i.e. outdoors, at pools etc.

Utility model DE 2020 16 510 U1 discloses a tile comprising an illuminating decoration composed of light-emitting diodes (LEDs). The LEDs are led through holes made in the tile from the rear side of the tile, to form a point-like decoration on the front side of the tile. The wiring of the LEDs is realised on the rear side of the tile; the solution does not expressly provide for water-tightness or resistance to humidity.

Utility model DE 203 14 228 U1 discloses an illuminated tile, whereas the tile is made of transparent or translucent material at least partly on its upper side, and it has at least one zone at its edges where LEDs are disposed as light sources, and the light of the LEDs is conducted by the transparent or translucent material of the tile. Lest the LEDs should appear as disturbing light sources for an observer, there is a non-transparent frame along the edge of the tile. The description confirms that by "tile" it means the widest possible array of materials, and the LEDs are electrically linked and connected along the rear side of the tile.

Patent specification DE 10 2005002783 A1 discloses an illuminated glass tile. The description rates as disadvantageous the previously known solutions where illumination is provided directly by light sources fastened in the tiles, and deems it more useful and aesthetic to emit the light of the light sources on the surface of the tile, instead of making point-like light sources visible. It proposes as a solution a tile made of transparent or semi-transparent material, preferably of glass, with a sandwich-like structure: the light sources are disposed behind the glass plate at a distance secured by a distance piece, and the printed board carrying the light sources, the distance pieces and the glass plate are clamped together so as to form a single unit. Of course, this solution results in a structure which is inevitably thicker than a normal tile.

Utility model DE 20 2004020281 U1 relates to an illuminating system comprising a cover plate and an illuminating element, with a printed circuit board fixed on the rear side of the wall or floor tile extending beyond the edge of the tile laterally and containing one or several light sources on the extending part.

Patent specification EP 1 268 953 B1 discloses a wall or floor tile made of ceramics, wood, plastic, natural or agglomerated stone comprising light-conducting and -emitting units, and light is supplied to these units by optical fibres. This solution focuses first and foremost on the placement, introduction of the optical fibres, with an eye on the fact that fibre optical illuminating had already been used by others.

Patent specification EP 1 469 141 B1 discloses a tile comprising a light source. According to the description, the tile is suitable for forming larger patterns in combination with other tiles. LED is proposed as illuminating element and as light source; it is located in the structure of the tile, and according to the description it can installed from the rear, from the front or from the side, from the edge of the tile. The illuminating structure causes less than 3 mm extra thickness; the electrical connections are arranged and made primarily on the back side of the tile.

Patent specification US 7,358,929 B2 discloses tile illuminating systems and tile illuminating methods. In this solution, the light sources installed in the tile are controlled by a micro-computer unit which operates the integrated light sources based on a program or on external control.

Patent specification US 2009/0162593 A1 discloses a mosaic whereas the individual mosaic elements are mounted so as to be spaced from one another by joints, and the light of a remote light souirce is transmitted to the joints by optical fibres.

Patent specification US 2007/0103902 a1 discloses an illuminating fixture comprising LEDs on a printed circuit board mounted on the rear plane; a fully or partly translucent external plate in front of the LEDs, in a position secured by a distance piece, which closes the internal space of the fixture this way. According to this solution, the internal space may be empty, but the LEDs may be filled even fully with a translucent and light-transmitting material such as e.g. resin. The aim of this solution is, among other things, to display of various signs, decorations for the viewer.

Patent specification WO 2009/017629 A1 discloses a decorative illuminating tile comprising LED light sources fitted into the peripheral zone of the bottom layer of a box-like tile structure comprising several layers, hence the corner zones of the decorative tile emit stronger light than the rest, which is worthy of attention considering the light design criteria.

WO 2011/036614 describes a floor covering system with a PVC-based floor covering and a lighting system arranged to generate light. The PVC-based floor covering has a user side and an opposite back side. The lighting system is arranged at the back side of the PVC-based floor covering. The PVC-based floor covering has a light transmission for light generated by the lighting system in the range of 0.5% to 30%. The PVC-based material of the external protective cover is unprotected against external mechanical and environmental impacts (dirt, water, humidity, sunshine, etc.) and has physical and thermal characteristics that most often differ from the characteristics of the surrounding construction elements. This requires special handling in course of planning, implementing and maintenance.

As can be seen from the embodiments of the currently known technical level presented above by way of examples only, currently, there is no illuminating tile in the market available in sizes and with characteristics similar to the traditional ceramic tiles which could be used indoors or outdoors so as to generate a random or programmed light effect. The aim of the proposed solution is, on the one hand, to overcome the above deficiency. The aim is, furthermore, to develop an illuminating tile of a modular structure, implying, on the one hand, the easy fitting, also in the mechanical sense, of the units to each other and, on the other, the possibility of connection in series beyond the possibility of mechanical fitting, so as to make any creative visual appearance to be realised by the illuminating tiles feasible.

In an aspect of the invention this goal is realised by a modular illuminating tile according to the features of claim 1.

In a preferred embodiment of the illuminating tile according to the invention the carrier board comprises a printed circuit board.

In a further preferred embodiment of the illuminating tile according to the invention the illuminating element comprises a light-emitting element.

In a further preferred embodiment of the illuminating tile according to the invention the illuminating element comprises an active light-emitting element.

In a further preferred embodiment of the illuminating tile according to the invention the illuminating element comprises a light-reflecting element.

In a further preferred embodiment of the illuminating tile according to the invention the means supplying energy comprises a layer or wiring made of electrically conductive material.

In a further preferred embodiment of the illuminating tile according to the invention the illuminating tile is surrounded by a mounting frame the width of which corresponds to the aggregate height of the carrier board, the illuminating element and the protective cover, upon which one or several openings are made for leading through one or several connecting means.

In a further preferred embodiment of the illuminating tile according to the invention the carrier board is made of four rectangular carrier board slices connected by hinges in the plane of the lateral surface of the carrier board supporting the illuminating elements, of which carrier board slices a connecting means is fixed on at least one of the two extreme carrier board slices.

In a further preferred embodiment of the illuminating tile according to the invention the energy storing element is fixed on carrier board, which is electrically connected to the one or more connecting means and illuminating elements.

In a further preferred embodiment of the illuminating tile according to the invention the energy storing element is in electrical connection with a solar unit forming exclusive or auxiliary energy supplying means and fastened on the carrier board.

In a further preferred embodiment of the illuminating tile according to the invention the energy storing element is connected to a connecting means through a diode each connected in blocking direction.

In a further preferred embodiment of the illuminating tile according to the invention the energy storing element comprises a battery.

In a further preferred embodiment of the illuminating tile according to the invention the energy storing element comprises a condenser.

In a further preferred embodiment of the illuminating tile according to the invention a control unit is inserted between the illuminating element and the connecting means.

In a further preferred embodiment of the illuminating tile according to the invention the control unit comprises a programmable microcontroller.

In a further preferred embodiment of the illuminating tile according to the invention a wireless communicator and sensor unit is connected to the control unit.

In a further preferred embodiment of the illuminating tile according to the invention the wireless communicator and sensor unit is one of a radio-frequency-based receiving unit, a Bluetooth unit, a Zigbie unit.

In a further preferred embodiment of the illuminating tile according to the invention the active light-emitting unit comprises at least one light-emitting diode.

In a further preferred embodiment of the illuminating tile according to the invention the illuminating elements consist of light-emitting diodes of a shape and size allowing that they be connected to each other mosaic-like.

The proposed modular illuminating tile can be manufactured easily, at low cost; due to its design, it can be disposed or mounted in any pattern, and it is suitable for informative or decorative functions. Where the illuminating tile comprises an intelligent microcontroller or a unit suitable for communication, the surface formed of the illuminating tiles can, as the case may be, display any information, whether in text or graphic format.

In what follows, the invention will be described in more detail with the help of the enclosed drawing, which provides a schematic illustration of some exemplary embodiments of the illuminating tile. In the drawing,
- Figure 1: is the perspective view of the modular illuminating tile according to the invention;
- Figure 2: is the schematic cross-section of a preferential and feasible exemplary embodiment of the modular illuminating tile according to the invention;
- Figures 3a-3c: show a possible embodiment of joining two illuminating tiles;
- Figure 4: is the schematic view of a possible embodiment of the contactless connection;
- Figure 5: depicts the electrical structure of a possible embodiment at block diagram level;
- Figure 6: illustrates a possible embodiment of the power supply of the block diagram shown in Figure 5;
- Figure 7: shows a further possible embodiment of the power supply;
- Figure 8: is the block diagram of the malfunction-reducing redundant supply of the proposed illuminating tile models;
- Figure 9: shows a possible connection of the connecting means of the illuminating tile according to the invention;
- Figure 10: shows a possible installation of the microcontroller of the illuminating tile;
- Figure 11: is the schematic view of a possible design of the repair module allowing to replace the defective illuminating tile module of the illuminating tile according to the invention;
- Figure 12: is the schematic view of a possible embodiment of the illuminating tile, seen from the wiring side of the printed circuit board;
- Figure 13: depicts the parts side of the carrier board according to Figure 12, with integrated illuminating elements and control device and
- Figure 14: is a schematic view of a possible embodiment of the illuminating tile comprising also a further sensor unit.

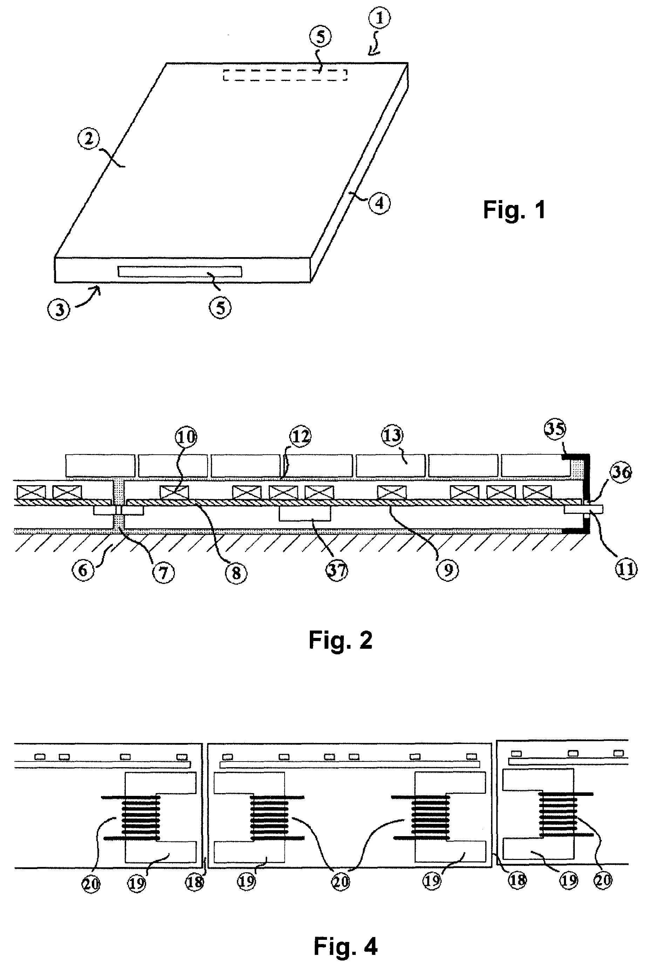

Figure 1 shows a possible embodiment of the proposed modular illuminating tile shown by way of example only. Illuminating tile 1 is realised as a thin plate with a substantially rectangular, in the present case square area, similar to a floor tile or wall tile; in the figure, its upper side 2 and bottom side 3 are plane, and its lateral edge 4 along the perimeter lies in planes which are perpendicular to sides 2 and 3, respectively. In the example shown here, the surface of lateral edge 4 is plane, with only male connector 5 forming the connecting means extending at the respective opposite ends of illuminating tile 1, of which one is represented by a dotted line only.

Figure 2 is the schematic representation of the cross section of the structure of illuminating tile 1 shown in Figure 1. Illuminating tile 1 - of which one piece is shown in its entirety, but only parts of the adjacent illuminating tiles 1 are shown on the left and right sides - is fixed on substrate 6 through an intermediary adhesive layer 7. Carrier board 8 is fixed to the adhesive layer 7 by gluing and in the example shown here, it is a double-sided printed circuit board comprising in the figure at its bottom side a wiring 9 made by any known process, e.g. by etching, for the purpose of the transmission of electrical energy, and on its upper side illuminating elements 10 serving for the illumination of illuminating tile 1 are fixed. In the present example, illuminating elements 10 are light-emitting diodes (LEDs) emitting light of a colour which may be freely chosen, which are fixed on the carrier board 8 by e.g. SMD technique. On each of the two, left and right, sides of the illuminating tile 1 presented here, connection means 11 are formed, the preferential and potential realisation of which will be shown in more detail later on. A further adhesive layer 12, in present case a transparent one, is applied on the carrier board 8 in a way covering also the illuminating elements 10, which protects, among other things, the layers, elements and units under it, hence carrier board 8 and illuminating elements 10, against any mechanical and weather effects, while also providing an appropriate base for gluing mosaic pieces 13 letting the light through to a predefined extent onto it.

The basic unit of the wall cover composed of single modular illuminating tiles according to the invention is the module shown in Figure 2. It may be of any size, starting from a single mosaic piece 13, it may be of a size corresponding to a plurality of mosaic pieces 13. Thanks to the connection system being applied, the modules of illuminating tile 1 constituting a wall cover can be connected to each other in diverse ways, and these structures, of the shape of a string, a star or any other form, are connected to the outside world via one or several interfaces to be presented later on. Thus the majority of illuminating tiles 1 can be accessed via another illuminating tile 1; this has the advantage that anyone can produce an individual active surface from predefined illuminating tiles 1.

The function of the external adhesive layer 12 is to protect the electronic components and units located in the layers underneath from the environmental impacts, so the materials to be used for this purpose must be chosen so as to be highly resistant to temperature, humidity and UV radiation; this choice can be securely performed by an expert or a person skilled in the art based on his relevant knowledge. If necessary, adhesive layer 12 can also be waterproof. To the adhesive layer 12 is connected a cover layer made of external decorative mosaic pieces 13 which are fixed onto the individual illuminating tiles 1 prior to or after their installation.

Illuminating tile 1 is meant to illuminate, that is, to generate light; to transmit the external effects, forces impacting on mosaic pieces 13 to substrate 6. Illuminating tile 1 comprises the electronic parts, of which Figure 2 illustrates the light-emitting diodes constituting light units 10 and the printed circuit board constituting carrier board 8. The upper adhesive layer 12 of illuminating tile 1 is a homogenous, translucent, water-tight, hard adhesive layer 12. It embraces the electronic parts and provides for the homogenous distribution of heat on the surface. The function of adhesive layer 7 applied as bottom layer is to fix illuminating tile 1; in the present case, it is a cement-based material, so its properties correspond to those of cover materials used by construction industry.

The simplest type of modular illuminating tile 1 according to the invention comprises illuminating elements 10 and connecting means 11, supported and fixed by a carrier board 8. In upgraded embodiments, illuminating tile 1 is controlled from the exterior; so it comprises a control unit not shown in the figure, and in some embodiments also an intelligent control system in a loop-through array on an internal data bus in the known way, and the control unit on the one hand and its regulators and interfaces on the other hand are connected to this internal data bus.

In a further, upgraded embodiment of the proposed illuminating tile 1, the internal communication bus system is complemented by a bus designed to transmit control signals corresponding to the various illuminating picture segments from the control unit to the appropriate areas.

Illuminating tiles 1 belonging to the same module family can be joined universally, by any of their connecting means 11. Connecting means 11 are equivalent, that is, there is no dedicated output or input connecting means, hence the individual illuminating tiles 1 can connect freely, from any direction. Optional accessories, not shown and mentioned to keep this presentation simple, but well-known to those skilled in art, such as negative edge, positive edge etc. provide for creative integration.

Through the appropriate design of connecting means 11 and carrier boards 8, illuminating tiles 1 can also be fastened together in a flexible way, in which case the individual modules will be sufficiently flexible at the module boundaries for the active surface composed of illuminating tiles 1 to adhere to any 3D surface provided that the modules are sufficiently small, as e.g. in the case of an illuminating tile 1 made of mosaic pieces 13.

Illuminating tile 1 may be surrounded, as the case may be, by a mounting frame 35 the width of which corresponds to the aggregate height of carrier board 8, illuminating element 10 and the protective cover.

In yet another upgraded embodiment of the proposed illuminating tile 1, an energy storing element 37 is fixed on carrier board 8, which may be, as will be known to those skilled in the art, a battery, a condenser storing the energy feeding illuminating tile 1, or even a solar unit in optical connection with the external surface of carrier board 8. Energy storage unit 37 may be linked to connecting means 11 through diodes not illustrated separately, connected also in the known way in blocking direction.

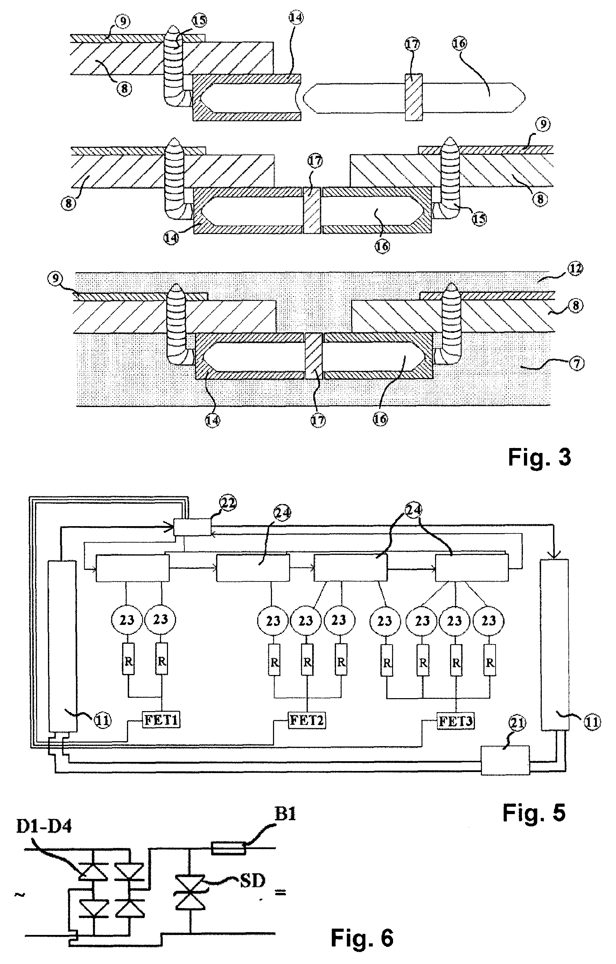

Figures 3a-3c show a possible embodiment of connecting means 11 in more detail. As can be seen, connecting means 11 comprises connector sleeves 14, soldered in the printed circuit board constituting the carrier board 8 by their lead-out wire 15, and their distal end extend beyond the carrier board 8. Connector sleeves 14 integrated into the individual illuminating tiles 1 - positioned, as appropriate, in illuminating tiles 1 joined together modularly exactly opposite one another - are designed so as to be able to receive one connector pin 16 each, which provide permanent and good electrical connection due to the adequate choice of the material of connector sleeve 14 and connector pin 16, e.g. due to silvering. In the case under study, a shoulder 17 is created on the middle of connector pin 16, preferably made of some insulating material, e.g. plastic, the function of which is, on the one hand, to prevent that connector pin 16 should sink too deeply into connector sleeve 14 and, on the other, for two illuminating tiles 1 placed closely side by side, this shoulder 17 closes the inputs of the connector sleeves 14, as can be seen in Figures 3b and 3c. Due to the materials used and the soldering technique, this design permits also an angle divergence of a certain degree between the individual illuminating tiles 1; the position/angle ever of the illuminating tiles 1 placed in their final position is then fixed definitively by adhesive layer 7 and adhesive layer 12.

The electricity input and, as the case may be, the electric control signals are transmitted from one illuminating tile 1 to another by connecting means 11 between the illuminating tiles 1. Connecting means 11 are good electrical conductors. Preferably the connection points are airtight to avoid potential corrosion problems; this is ensured on both sides in the manner presented here by the adhesives used for adhesive layer 7 and adhesive layer 12, respectively.

It is conceivable that in special cases it is more advantageous to apply inductive coupling, of a lower efficiency, instead of plug-in power supply, e.g. for mobile systems or systems which can be configured in alterably manner. For this purpose, we exploit the known effect that at high frequencies magnetic field can carry the necessary electric power between two illuminating tiles 1 through an air gap 18 between them. A U-shaped iron core 19 is placed in the peripheral zone of each illuminating tile 1, with a coil 20 arranged on it. In the adjoined illuminating tiles 1, magnetic field will be closed through the iron core 19 parts separated merely by air gap 18 and a minimum adhesive layer 7, which ensures that energy supplied by coil 20 of one illuminating tile 1 should induce sufficient voltage in the adjacent coil 20 of the neighbour illuminating tile 1.

Figure 4 is a schematic representation of this possible embodiment.

If power supply is provided locally, but control and the connection between the individual illuminating tiles 1 can only be established without wiring, e.g. to provide for communication between the interactive mosaic surfaces of elevators and a control panel, an other wireless connection can also be applied, which may be realised by radio frequency units such as the radio modules of the German Hoperf company, or the Bluetooth or Zigbie connection well-known in information technology. All three communication interfaces offer modules which can be connected to control unit 22 via a serial port. If need be, the system can be connected to remote controllers, mobile applications or to a smart phone. RFID allows many creative solutions, such as user identification, custom-tailored colours/animation, entry/information system built into the cover panels, or in a hotel the owner of a card drawn at the end of the corridor can be guided home by animation/an arrow moving on the floor etc.

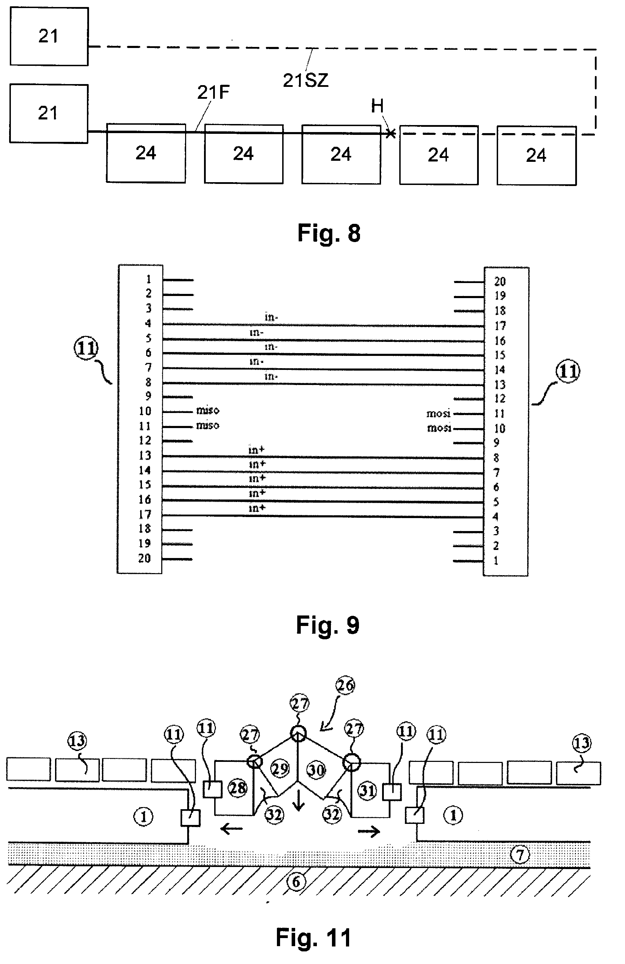

Figure 8 shows how to maintain connection between individual illuminating tiles 1 in a safe way also in case of unexpected breakdown. This is ensured by redundant control and supply, a solution that is self-repairing and error-resistant to some extent, the extent being determined by the level of redundancy being applied. To prevent contact errors due to corrosion, dilatation movements, and to provide for alternative solutions in case of malfunction, the number of connectors applied in connecting means 11 can be multiplied and hence connector redundancy can be created. The distribution of the connectors is of the 1:N type redundant distribution, that is, the same signal or voltage is transmitted through several connecting pegs.

Pixel redundancy is applied to provide protection against the malfunction or obsolescence of illuminating elements 10 applied in illuminating tiles 1. The life-span of light-emitting diodes can only be estimated, so 1 :N redundancy is provided through the alternative control of reserve light-emitting diodes for breakdown cases; the life-span of the individual illuminating tiles 1 can thus be raised n-fold.

Control and power supply to systems and sub-systems within the individual illuminating tiles 1 is provided from several directions to prevent any illuminating tile 1 errors caused by a point-like defect.

As can be seen in Figure 8, adaptive redundant control, that is, bi-directional control and power supply can be applied in case of the failure of the cover illumination such as damage to the cover, corrosion, parts failure etc. In such cases, the system presented here can recognise errors of a certain level and identify an alternative route for the necessary control and power supply. Where the energy supply chain is broken, this is detected by a control unit designed in a way which is suitable for that purpose, and supply is launched also from the other end-point. A similar process is followed for the data traffic: if no feedback signal is received, control signals are being sent with the help of an appropriate control unit from both directions.

Figure 5 presents the electrical structure of an illuminating tile 1 at block diagram level. In this embodiment shown by way of example only, connecting means 11 are mounted at both ends of illuminating tile 1 which are electrically connected to one another and to a power supply 21. Power supply 21 ensures the power supply of the electrical parts in the illuminating tile 1 in the known way; for the sake of simplicity, the conductors concerned are omitted from the figure. Illuminating tile 1 comprises a control unit 22, a microcontroller to be presented in more detail later, one input of which is connected to connecting means 11, and one output to the other connecting means 11. In the case presented here, the three control outputs of control unit 22 are connected to the control inputs of one semiconductor switching element FET1, FET2, FET3 each, and the outputs of the semiconductor switching elements FET1, FET2, FET3 are connected via a series resistor R to one output respectively of light-emitting diodes 23 arranged in groups of three. The other output of light-emitting diodes 23 is connected to the output of a driver stage 24 each; the driver stages 24 are connected in series to one another, and the input of the first driver stage 24 connects to a further output of control unit 24, and the output of the last control unit 24 connects to a further input of control unit 22. Control unit 22 comprises a clock generator, the output of which is led to respective further inputs of each driver stage 24.

The illuminating tile 1 shown in the figure is a module of the size of 5x12 mosaics, providing for an RGB or monochrome static redundancy level of max. n=3, without intelligent error repair, but each pixel is illuminated by several light-emitting diodes 23. As it can be seen in the figure, illuminating tile 1 comprises three areas the light intensities of which can be set from the outside independent of each other.

At the start, control unit 22 expects the signal from both directions, that is, from both connecting means 11, and when it receives it through a connecting means 11 acting as input from either side, it defines its other port as an output, and transmits data through that. Its task is to control the three semiconductor switching elements FET1, FET2, FET3 regulating the light intensity of the field of the three light-emitting diodes 23 through the modification of the filling factors. In the case presented here a highfrequency control is applied for physiological reasons, lest it should disturb the environment. Supply unit 21 comprises polarity and overcurrent protection, in the exemplary way shown in Figure 6, and it also comprises a DC-DC transducer 24 which converts an input voltage, higher in the present case, down to the appropriate voltage level. The individual light-emitting diodes 23 are operated with the help of R resistors adjusting the appropriate operating points.

Figure 6 illustrates a possible embodiment of polarity and overcurrent protection in power supply 21. From electronic point of view, this provides for polarity-independent connection allocation and protection. Four diodes D1 to D4 in the figure are in Graetz connection, and they connect to inputs In1 and In2 of power supply 21, whereas to the output of the Graetz rectifier bridge on the one hand an suppressor diode SD is connected in the normal way and, on the other, it is connected through a fuse B1 to the outputs Out+ and Out- of power supply 21. If a voltage spike appears in the supply voltage under the inductive effect of a nearby lightning, for example, the suppressor diode SD will not let this spike through towards the electronic parts of illuminating tile 1, but will heat them away, distributed between the diode bridge consisting of diodes D 1 to D4 and the conductor resistance. Four-diode rectification makes the input polarity-independent. If the system breaks down, fuse B1 switches off power supply 21 and the electronic units of illuminating tile 1 from the supply input, but when the error is repaired, e.g. the overload is terminated, it switches it back.

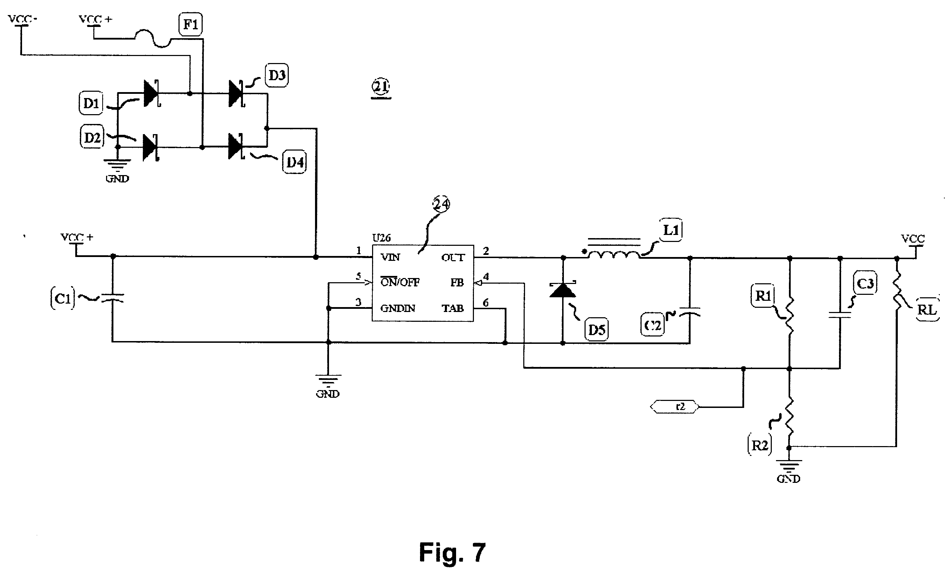

Figure 7 depicts a wiring diagram of another possible embodiment of the power supply 21. In addition to the connection presented in Figure 6, power supply 21 comprises a DC-DC transducer 24 realised in the given case by an integrated power circuit of type LM2596S, the connection and operation of which can be traced in power circuit catalogues. One output of the full-wave rectifier bridge made up of the diodes D 1 to D4 is connected to the input VIN of DC-DC transformer 24, whereas the other output of the bridge is tied to ground GND. The direct current input VCC of power supply 21 connects to the same input, and a filter capacitor C1 is connected in between the input VIN of DC-DC transducer 24 and its joined inputs ON/OFF and GNDIN, the latter being also connected to ground GND. The cathode of a Schottky diode D5 and one output of smoothing reactor L1 are connected to the output OUT of DC-DC transducer 24. The anode of the Schottky diode D5, together with the other output of filter capacitor C2 connecting to the other output of the smoothing reactor L1 and the output TAB of DC-DC transducer 24 are connected to ground GND. A voltage divider consisting of resistors R1 and R2 and parallel with the resistor R1 a filter capacitor C3 are connected to the output of smoothing reactor L1, and the joint point of the voltage divider is led back to input FB of the DC-DC transducer 24. The output of smoothing reactor L1 constitutes at the same time also the output of the power supply 21, onto which a load RL is connected. The voltage of the system and the operating point of light-emitting diodes 23 can be set by adjusting resistors R1 and R2.

Figure 9 is the schematic representation of a possible embodiment of connecting means 11 and its wiring diagram. As can be seen, in the presented embodiment, one connecting means 11 is a 20-pin connector, where 5-5 connector pins 16 and connector sleeves 14, respectively, provide for the transmission of the positive and negative supply voltage IN+, IN-, while 2-2 connector pins 16 and connector sleeves 14, respectively, provide for the redundant transmission of the *mosi* and *miso* control signals, respectively.

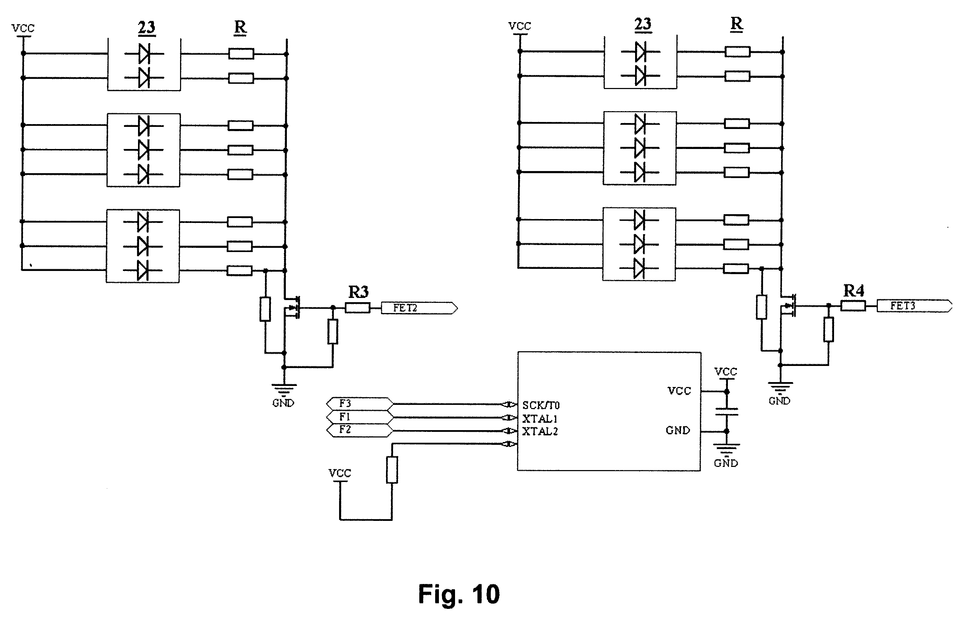

Figure 10 shows connection details of relevance for the microcontroller of the type AT-INY13-8SC constituting the control unit 22. The input GND of controller device 22 is connected to ground; its input VCC is connected to the supply voltage, and a filter capacitor C4 is inserted between them. Outlets F1, F2 and F3 of control unit 22 are led to the control electrodes of semiconductor switching elements FET1, FET2, FET3 outlined in Figure 5; two of these, namely semiconductor switching elements FET2 and FET3, and light-emitting diodes 23 and resistors R associated with them are also represented here. As can be seen, output F2 of the control unit 22 is tied to the control electrode of the field effect transistor constituting semiconductor switching element FET2 through a resistor R3 which is connected also to the ground GND through a resistor R4, whereas the source electrode of the semiconductor switching element FET2 is connected to ground GND and its drain electrode connects through a resistor R to the cathode of light-emitting diodes 23, and the anode of light-emitting diodes 23 are connected jointly to the driver stage 24.

If the system comprising the proposed illuminating tiles 1 breaks down and it is not restored even after restart, it may be necessary to replace an illuminating tile 1. This is a rather cumbersome task, since the cover has to be undone and then remade without leaving any external marks. The first step for that is to dismount the mosaic cover: cut along the module boundary with due precision e.g. by a diamond cutting disc which is thinner than the joint. As a second step, lift out the defective illuminating tile 1, and clean the cavity so created so as to be able to place a replacement illuminating tile 1 into it. As a third step, try to place the replacement module into the emptied cavity, to be sure you managed to create sufficient space, and then replace the impervious layer by administering a commercially available impervious layer. Wait until it dries and then put illuminating tile 1 into the bed formed by adhesive layer 7 and check its correct operation. As a fourth step, after drying, close the cover by using cover materials which are identical with the original ones.

Figure 11 outlines a novel illuminating tile 26 suitable for repairing or, more precisely, replacing such a defective illuminating tile 1. As can be seen, the carrier board 8 of the illuminating tile 26 is not a single printed circuit board, but consists of four carrier board slices 28 to 31, connected to each other in the plane of the carrier board 8 supporting the illuminating elements 10 by hinge points 27, and the carrier board slices 28 to 31 are connected to one another by some known flexible sealing agent 32. There are connecting means 11 on the carrier board slices 28 and 31, formed and fixed in the way disclosed above. Thanks to the design presented here, the illuminating tile 26 is compressible and its relevant size is smaller in compressed state than the size of the previous defective illuminating tile 1 dismounted, probably by destruction, and in this state it can be inserted in between two other illuminating tiles 1 fixed already originally onto the substrate 6, and thanks to the flexible sealing agent 32 it will regain its original form and size once installed, and its connecting means 11 will enter into electrical connection with the appropriate connecting means 11 of the two adjacent non-defective illuminating tiles 1. The installed illuminating repair tile 26 must be put in an appropriate adhesive layer 7, and after placement the external adhesive layer 12 and mosaic pieces 13 must be restored so as to protect it from mechanical damage and from any detrimental environmental effect and, as the case may be, to ensure also its water-resistance this way.

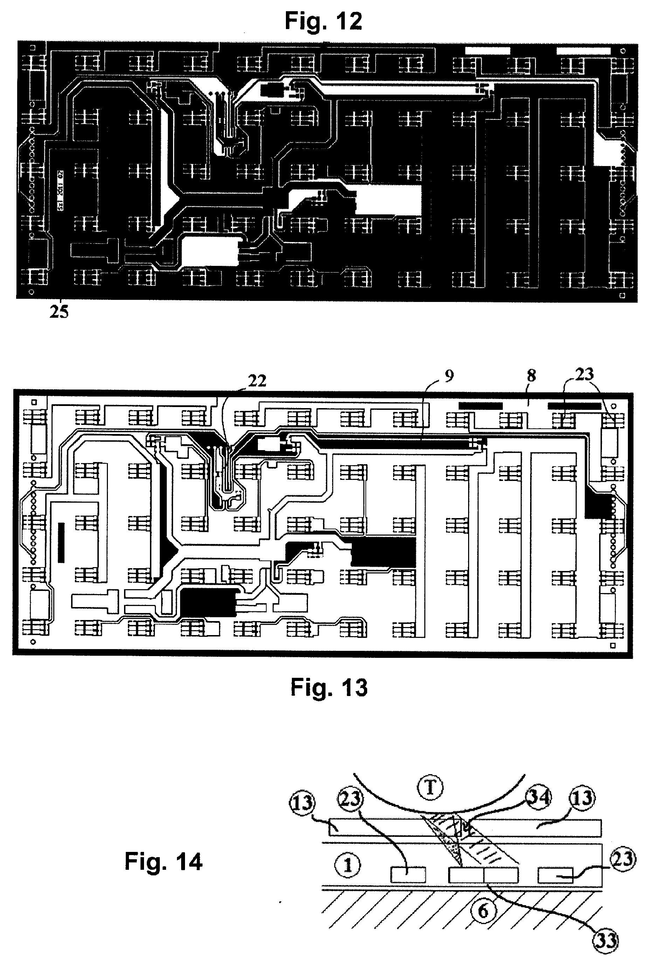

Figure 12 shows a possible embodiment of the printed circuit board constituting the carrier board 8 of the illuminating tile 1, with conductors 25 providing the wiring of the illuminating tile 1, and Figure 13 shows the other side of the printed circuit board which already comprises light-emitting diodes 23 constituting the illuminating elements 10, semiconductor switching elements FET1, FET2, FET3 and the microcontroller constituting the control unit 22. Of course, the position and number of the individual components, the shape and size of carrier board 8 depend on the illuminating tile 1 ever and they can be configured freely.

Figure 14 shows a schematic view of a possible embodiment of an illuminating tile 1 comprising, in addition to the components listed already, a further communicator and sensor unit 33, which can sense, for example, the change in temperature, in the incoming light intensity, the proximity of an object T, etc. To that effect, as the case may be, a sensor opening 34 must be left between mosaic pieces 13, if the communicator and sensor unit 33 has optoreflective or -capacitive properties, albeit infra beams can pass through mosaic pieces 13. The output of communicator and sensor unit 33 may, for example, be connected to the appropriate control input of the control unit 22 in the illuminating tile 1, depending on the type of the microcontroller ever constituting the control unit 22. Control device 22 can be programmed, for example, so as to change colour based on information from the temperature sensor integrated in the illuminating tile 1 in the whole or in part of the illuminating tile 1, or to display animation, change light intensity etc.

It is possible to detect by the optoreflective or -capacitive method the touching of certain areas of the surface of the illuminating tile 1. By way of example, in line with the mosaic pattern, highly creative things can be made with its help, for example, by making the icons of the control keys out of mosaic pieces and by providing them with touch sensors or, for example, through connection with the water works system, it is possible to select the water strength and temperature by touching the mosaic of a washbasin/shower cabin. The essence of optoreflective operation is the presence of infra light, i.e. light of a spectrum which is invisible to the naked eye, besides the coloured light-emitting diodes 23. When one touches the surface, this light is reflected, and that is detected in known way by an infra sensor. Lest other infra sources should disturb the system, the infra signal is modulated, and the sensor detects only the modulated, reflected, infra signal.

Generally, light transmittance by the cover or in particular of mosaic pieces 13 constituting it is constant in both directions. Thus it is not only possible to emit light, but also to measure the ambient light. It is possible to draw inferences as to the time of the day from the relative value of light intensity. This is what happens e.g. in case of light intensity depending on ambient light: at night, the cover must hardly emit any light, whereas at noon higher light intensity is needed to produce the same effect, Furthermore, for physiological reasons, preferably warmer light temperatures are used in the evening, which promote relaxing, whereas at daytime cooler illuminating improving the capacity for concentration is more expedient. To compensate for the decline in light output of light-emitting diodes 23 during their life-time, aging, the programme of control unit 22 can be designed so that light-emitting diodes 23 be provided an input of increasing power which has a compensatory effect resulting in higher light emission, in a simpler case on the basis of the well-known signal curves or, for more precise results, by applying special light measurement, of course within the limits of the threshold values of the devices concerned. Extra heat generated in the meanwhile can be borne by illuminating tile 1 without suffering any damage.

Every illuminating tile 1 receives surface filling, which is not only advantageous in case of a possible malfunction, but also distributes the temperature over the carrier board 8. The adhesion capacity of the layer poured onto it is enhanced by pins mounted, in the simplest case soldered, in a scattered way on the printed circuit board constituting the carrier board 8, not shown in the figures, similarly to concrete armouring. Connecting means 11 are soldered on the side of the printed circuit board opposite light-emitting diodes 23, so as to make perfect light generation possible at the connection points. The height of the parts is below light beam of light-emitting diodes 23 and filter capacitors C 1 to C3 are recessed through windows cut in the printed circuit board.

The parts are installed in function of the order ever, since each product can have different numbers of light-emitting diodes 23. Separate installation files are made for the manufacturing robots for each product regarding the illumination of different formations, coloured pictures, including the colour and installation position of a given light-emitting diode 23, the intensity of the colour concerned regulated by resistors R located next to light-emitting diodes 23.

The program operating the proposed modular illuminating tiles, if any, is most simple. At start, a control unit 22 monitors both of its communication outputs. When it receives data from one direction, it defines the other communication array as output and transmits data of two types: pixel information and command. For pixel information, the data channel functions similarly to a shift register: when the control unit receives new data, it forwards the package stored previously. When each storage unit has its own pixel data, a command runs along the chain which is forwarded promptly upon interpretation by every tile 1 it then displays the new light intensities/colours.

The individual illuminating tiles 1 can be combined as easily as LEGO pieces so as to satisfy the changing demands.

Once the program code is burnt into the control unit 22, it is cast with the help of a mould, so that illuminating tile 1 should obtain its final form. Its top is covered by translucent epoxy-based mosaic adhesive, and in a second stage its bottom is covered by cement-based adhesive. These two impermeable layers protect the internal electronic parts from mechanical effects and shorts and corrosion caused by water. The cement-based rear/under plane is important for adhesion/adherence, and the resin-based front plane is compatible with the majority of adhesives used to stick up translucent covers.

The finished illuminating tiles 1 are always subjected to testing and the measured parameters are evaluated. The parameters being measured may include power drain, temperature, behaviour at maximum voltage, concussion, water-resistance etc.

The illuminating tile 1 is characterised by properties similar to common tile coverings. It is made of materials used by construction industry (e.g. cement-based adhesives), which promotes easy installation. When installed, illuminating tiles 1 are step-proof, since they transmit any force impacting on the surface to the base; they have waterproof coating, and even a water-tight layer may be put around them after installation. This double layer prevents any shorts and corrosion. Light does no damage to illuminating tiles 1. The UV effect of the Sun may be detrimental, since with time it erodes the surface of the materials and reduces their light transmission capacity or temperature increase at high temperatures may activate the protective circle of some illuminating tiles 1 and the modules may switch off. But high temperature due to protracted exposition to sunlight may be detrimental even in shut-down state. Owing to their known features, light-emitting diodes are sensitive to high temperature which increases the number of micro-fissures in the semi-conducting material which, in turn, reduces efficiency.

The materials applied in illuminating tile 1 are identical to the cover materials used most frequently by construction industry, and hence their heat expansion properties are also similar. Consequently, the entire surface moves together, preventing the generation of any tension, crack, defect.

The light transmission capacity of the applied internal materials diminishes with time under the effect of UV light, and fissures due to wear and dilatation also reduce the light transmission capacity.

Weight and surface of an illuminating tile 1 are near-identical with that of the common floor tile coverings. Consequently, the stability factor of their fixing by gluing is also similar. Glass mosaics represent a preferred covering in airplanes and vessels due to their smaller volume. On demand, they can also be manufactured with a rear plane cast in foam, which makes the construction even lighter.

Since the surface is covered by a common covering, every property is determined by that circumstance. The wear of the surface depends on the quality of the covering layer.

**List of reference signs:**

| | |
|---|---|
| 1 tile | B1 fuse |
| 2 side | Out+, Out- output |
| 3side | 24 DC-DC transducer |
| 4 edge | VIN input |
| 5 male connector | VCC input |
| 6 substrate | ON/OFF input |
| 7 adhesive layer | GNDIN input |
| 8 carrier board | GND ground |
| 9 wiring | C1, C2, C3, C4 filter capacitor |
| 10 illuminating element | OUT output |
| 11 male connector | D5 Schottky diode |
| 12 adhesive layer | L1 smoothing reactor |
| 13 mosaic piece | Tab output |
| 14 connector sleeve | R, R1, R2, R3 resistor |
| 15 lead-out wire | FB input |
| 16 connector pin | mosi, miso control signal |
| 17 shoulder | F1, F2, F3 output |
| 18 air gap | 25 conductor |
| 19 iron core | 26 tile |
| 20 coil | 27 articulated joint |
| 21 power supply | 28-31 carrier board slice |
| 22 control unit | 32 sealing agent |
| FET1, FET2, FET3 semiconductor | 33 communicator and sensor unit |
| switching element | 34 sensor opening |
| 23 light emitting diode (LED) | 35 mounting frame |
| 24 driver stage | 36 opening |
| D1 to D4 diode | 37 energy storing element |
| In1, In2 input | T object |
| SD suppressor diode | RL load |

## Claims

1. A modular illuminating tile (1) comprising
- a carrier board (8);
- at least one illuminating element (10) fixed by soldering on the carrier board (8);
- means supplying energy to said at least one illuminating element (10);
wherein the means supplying energy to said at least one illuminating element (10) comprises electric wiring (9),
the electric wiring (9) is connected to at least one electrical connecting means (11) fixed mechanically on the carrier board (8) so as to permit mechanical and electrical serial connection of several modular illuminating tiles (1),
- a protective cover associated with said at least one illuminating element (10) and transporting the light radiated by said at least one illuminating element (10) to a predefined extent,
***characterised in that***
- between said protective cover and the carrier board (8) a further adhesive layer (12) is arranged in a way covering the illuminating elements (10) and providing protection against any mechanical and environmental impacts;
- said protective cover comprising mosaic pieces (13) made of materials used by construction industry having thermal characteristics ensuring a thermal behavior similar to common tile coverings used most frequently by construction industry.

2. Illuminating tile according to claim 1, ***characterised in that*** the carrier board (8) comprises a printed circuit board.

3. Illuminating tile according to claim 1 or 2, ***characterised in that*** the illuminating element (10) comprises a light-emitting element.

4. Illuminating tile according to claim 3, ***characterised in that*** the illuminating element (10) comprises an active light-emitting element.

5. Illuminating tile according to claim 3, ***characterised in that*** the illuminating element (10) comprises a light-reflecting element.

6. Illuminating tile according to any of claims 1 to 5, ***characterised in that*** the means supplying energy comprises a layer or wiring (9) made of electrically conductive material.

7. Illuminating tile according to any of claims 1 to 6, ***characterised in that*** the illuminating tile (1) is surrounded by a mounting frame (35) the width of which corresponds to the aggregate height of the carrier board (8), the illuminating element (10) and the protective cover, upon which one or several (36) openings are made for leading through one or several connecting means (11).

8. Illuminating tile according to any of claims 1 to 7, ***characterised in that*** carrier board (8) is made of four rectangular carrier board slices (28-31) connected by hinges in the plane of the lateral surface of the carrier board (8) supporting the illuminating elements (10), of which carrier board slices (28-31) a connecting means (11) is fixed on at least one of the two extreme carrier board slices (28, 31).

9. Illuminating tile according to any of claims 1 to 8, ***characterised in that*** the energy storing element (37) is fixed on carrier board (8), which is electrically connected to the one or more connecting means (11) and illuminating elements (10).

10. Illuminating tile according to claim 9, ***characterised in that*** the energy storing element (37) is in electrical connection with a solar unit forming exclusive or auxiliary energy supplying means and fastened on the carrier board (8).

11. Illuminating tile according to any of claims 9 or 10, ***characterised in that*** the energy storing element (37) is connected to a connecting means (11) through a diode each connected in blocking direction.

12. Illuminating tile according to any of claims 9 to 11, ***characterised in that*** the energy storing element (37) comprises a battery.

13. Illuminating tile according to any of claims 9 to 11, ***characterised in that*** the energy storing element (37) comprises a condenser.

14. Illuminating tile according to any of claims 1 to 13, ***characterised in that*** a control unit (22) is inserted between the illuminating element (10) and the connecting means (11).

15. Illuminating tile according to claim 14, ***characterised in that*** the control unit (22) comprises a programmable microcontroller.

16. Illuminating tile according to claim 14 or 15, ***characterised in that*** a wireless communicator and sensor unit (33) is connected to the control unit (22).

17. Illuminating tile according to claim 16, ***characterised in that*** the wireless communicator and sensor unit (33) is one of a radio-frequency-based receiving unit, a Bluetooth unit, a Zigbie unit.

18. Illuminating tile according to claim 1 to 17, ***characterised in that*** the active light-emitting unit comprises at least one light-emitting diode (23).

19. Illuminating tile according to claim 18, ***characterised in that*** the illuminating elements (10) consist of light-emitting diodes (23) of a shape and size allowing that they be connected to each other mosaic-like.

## Patentansprüche

1. Modulare Leuchtfliese (1) enthaltend
- eine Trägerplatte (8);
- mindestens ein Beleuchtungselement (10) das mittels Auflöten auf der Trägerplatte (8) befestigt ist;
- Mittel zur Energieversorgung des mindestens einen Beleuchtungselements (10),
wobei das Mittel zur Energieversorgung des mindestens einen Beleuchtungselements (10) elektrische Leitungen (9) enthält,
die elektrischen Leitungen (9) mit zumindest einem elektrischen Verbindungsmittel (11) verbunden sind, welches mechanisch an der Trägerplatte (8) befestigt ist, um mechanische und elektrische Serienschaltung von mehreren modularen Leuchtfliesen (1) zu ermöglichen,
- eine Schutzabdeckung, die dem zumindest einem Beleuchtungselement (10) zugeordnet ist und das durch das mindestens ein Beleuchtungselement (10) ausgestrahlte Licht zu einem vorbestimmten Maß weiterleitet,
***dadurch gekennzeichnet,* dass**
eine weitere Haftschicht (12) zwischen der Schutzabdeckung und der Trägerplatte (8) derart angeordnet ist, dass die Trägerplatte (8) die Beleuchtungselemente (10) bedeckt und gegen mechanische Belastungen und Umweltbelastungen beschützt;
die Schutzabdeckung Mosaiksteine (13) enthält, die aus in der Bauindustrie gebräuchlichen Materialien gefertigt ist, die ähnliche thermische Merkmale aufweisen, wie die am allermeisten in der Bauindustrie verwendeten Bodenbeläge und Fliesen.

2. Leuchtfliese nach Anspruch 1, ***dadurch gekennzeichnet,* dass** die Trägerplatte (8) eine Leiterplatte enthält.

3. Leuchtfliese nach Anspruch 1 oder 2, ***dadurch gekennzeichnet,* dass** das Beleuchtungselement (10) ein lichtemittierendes Element enthält.

4. Leuchtfliese nach Anspruch 3, ***dadurch gekennzeichnet,* dass** das Beleuchtungselement (10) ein aktives lichtemittierendes Element enthält.

5. Leuchtfliese nach Anspruch 3, ***dadurch gekennzeichnet,* dass** das Beleuchtungselement (10) ein lichtreflektierendes Element aufweist.

6. Leuchtfliese nach einem der Ansprüche 1 bis 5, ***dadurch gekennzeichnet*, dass** die Mittel für Energieversorgung eine Schicht oder Verdrahtung (9) aus elektrisch leitendem Material aufweisen.

7. Leuchtfliese nach einem der Ansprüche 1 bis 6, ***dadurch gekennzeichnet*, dass** die Leuchtfliese (1) durch einen Montagerahmen (35) umgeben ist, dessen Breite der Summe der Höhen der Trägerplatte (8), des Beleuchtungselementes (10) und der Schutzabdeckung entspricht, wobei der Montagerahmen eine oder mehrere Öffnungen (36) für die Durchführung eines oder mehrerer Verbindungsmittel (11) aufweist.

8. Leuchtfliese nach einem der Ansprüche 1 bis 7, ***dadurch gekennzeichnet*, dass** die Trägerplatte (8) aus vier rechteckigen Trägerplattenstücken (28-31) besteht , die mittels Scharniere in der Ebene der Seitenfläche der die Beleuchtungselemente (10) tragenden Trägerplatte (8) miteinander verbunden sind, wobei ein Verbindungsmittel (11) am zumindest einen der beiden äußeren Trägerplattenstücken (28, 31) befestigt ist.

9. Leuchtfliese nach einem der Ansprüche 1 bis 8, ***dadurch gekennzeichnet*, dass** ein Energiespeicherelement (37) an der Trägerplatte (8) befestigt ist, wobei das Energiespeicherelement mit dem zumindest einen Verbindungsmittel (11) und den Beleuchtungselementen (10) elektrisch verbunden ist.

10. Leuchtfliese nach Anspruch 9, ***dadurch gekennzeichnet*, dass** das Energiespeicherelement (37) mit einer Solareinheit in elektrischem Kontakt steht, die Solareinheit eine ausschließliche oder ergänzende Energieversorgung bildet und an der Trägerplatte (8) befestigt ist.

11. Leuchtfliese nach einem der Ansprüche 9 oder 10, ***dadurch gekennzeichnet,* dass** das Energiespeicherelement (37) mit einem Verbindungsmittel (11) jeweils über eine in Sperrrichtung eingesetzte Diode verbunden ist.

12. Leuchtfliese nach einem der Ansprüche 9 bis 11, ***dadurch gekennzeichnet,* dass** das Energiespeicherelement (37) eine Batterie enthält.

13. Leuchtfliese nach einem der Ansprüche 9 bis 11, ***dadurch gekennzeichnet,* dass** das Energiespeicherelement (37) einen Kondensator enthält.

14. Leuchtfliese nach einem der Ansprüche 1 bis 13, ***dadurch gekennzeichnet,* dass** eine Steuereinheit (22) zwischen dem Beleuchtungselement (10) und dem Verbindungsmittel (11) eingesetzt ist.

15. Leuchtfliese nach Anspruch 14, ***dadurch gekennzeichnet,* dass** die Steuereinheit (22) einen programmierbarer Mikrokontroller enthält.

16. Leuchtfliese nach Anspruch 14 oder 15, ***dadurch gekennzeichnet,* dass** eine drahtlose Kommunikations- und Fühlereinheit (33) mit der Steuereinheit (22) verbunden ist.

17. Leuchtfliese nach Anspruch 16, ***dadurch gekennzeichnet,* dass** die drahtlose Kommunikations- und Fühlereinheit (33) eine Einheit aus der Gruppe einer Radiofrequenz-Empfangseinheit, einer Bluetooth-Einheit und einer Zigbie-Einheit enthält.

18. Leuchtfliese nach Anspruch 1 bis 17, ***dadurch gekennzeichnet,* dass** das Beleuchtungselement (10) mindestens eine Leuchtdiode (23) enthält.

19. Leuchtfliese nach Anspruch 18, ***dadurch gekennzeichnet,* dass** die Beleuchtungselemente (10) aus lichtemittierenden Dioden (23) mit einer Form und Abmessungen bestehen, die eine mosaikartige Verbindung ermöglichten.

## Revendications

1. Dalle d'éclairage modulaire (1) comprenant
une plaque de support (8);
au moins un élément d'éclairage (10) fixée par brasage sur la plaque de support (8);
des moyens fournissant de l'énergie pour ledit au moins un élément d'éclairage (10);
dans lequel des moyens fournissant de l'énergie pour ledit au moins un élément d'éclairage (10) comprend un câblage électrique (9),
le câblage électrique (9) est relié à au moins un moyen de connexion électrique (11) fixés mécaniquement sur la plaque de support (8)
de manière à permettre une connexion mécanique et électrique en série de plusieurs dalles d'éclairage modulaires (1),
un couvercle de protection associé audit au moins un élément d'éclairage (10) et transport de la lumière émise par ledit au moins un élément d'éclairage (10) dans une mesure prédéfinie
***caractérisé en ce que***
entre le couvercle de protection et la plaque de support (8) une autre couche adhésive (12) est agencée de manière à couvrir les éléments d'éclairants (10) et assurant une protection contre les impacts mécaniques et environnementales;
ledit couvercle de protection comprenant des morceaux de mosaïque (13) faites de matériaux utilisés par l'industrie de la construction ayant des caractéristiques thermiques assurant un comportement thermique similaire aux matériaux les plus fréquemment utilisés par l'industrie de la construction.

2. Dalle d'éclairage selon la revendication 1, ***caractérisé en ce que*** la plaque de support (8) comprend une carte de circuit imprimé.

3. Dalle d'éclairage selon la revendication 1 ou 2, ***caractérisé en ce que*** l'élément d'éclairage (10) comprend un élément d'émission de lumiere.

4. Dalle d'éclairage selon la revendication 3, ***caractérisé en ce que*** l'élément d'éclairage (10) comprend un élément émettant de la lumiere active.

5. Dalle d'éclairage selon la revendication 3, ***caractérisé en ce que*** l'élément d'éclairage (10) comprend un élément réfléchissant la lumiere.

6. Dalle d'éclairage selon l'une quelconque des revendications 1 a 5, ***caractérisé en ce que*** des moyens fournissant de l'énergie comprend une couche ou câblage (9) en matériau conducteur de l'électricité.

7. Dalle d'éclairage selon l'une quelconque des revendications 1 a 6, ***caractérisé en ce que*** le dalle d'éclairage (1) est entouré d'un cadre de montage (35) dont la largeur correspond a la hauteur totale de la plaque de support (8), la élément d'éclairage (10) et le couvercle de protection, sur laquelle une ou plusieurs ouvertures (36) sont pratiquées pour le passage de un ou plusieurs moyens de connexion électrique (11).

8. Dalle d'éclairage selon l'une quelconque des revendications 1 a 7, ***caractérisé en ce que*** la plaque de support (8) est constitué de quatre tranches de plaque de support (28-31) rectangulaires connectés par des charnieres dans le plan de la surface latérale de la plaquette de support (8) supportant les éléments d'éclairage (10), dont carte porteuse tranches (28-31) un moyen de connexion électrique (11) est fixée sur au moins l'une des deux tranches de plaque de support (28, 31) extrême.

9. Dalle d'éclairage selon l'une quelconque des revendications 1 a 8, ***caractérisé en ce que*** l'élément de stockage d'énergie (37) est fixée sur la plaque de support (8), qui est relié électriquement à un ou plusieurs moyens de connexion électrique (11) et des éléments d'éclairage (10).

10. Dalle d'éclairage selon la revendication 9, ***caractérisé en ce que*** l'élément de stockage d'énergie (37) est en liaison électrique avec une unité solaire formant moyen de fourniture d'énergie auxiliaire ou exclusifs et fixée sur la plaque de support (8).

11. Dalle d'éclairage selon l'une quelconque des revendications 9 ou 10, ***caractérisé en ce que*** l'élément de stockage d'énergie (37) est relié a un moyen de liaison (11) a travers une diode connectés chacun en direction de blocage.

12. Dalle d'éclairage selon l'une quelconque des revendications 9 a 11, ***caractérisé en ce que*** l'élément de stockage d'énergie (37) comprend une batterie.

13. Dalle d'éclairage selon l'une quelconque des revendications 9 a 11, ***caractérisé en ce que*** l'élément de stockage d'énergie (37) comprend un condensateur.

14. Dalle d'éclairage selon l'une quelconque des revendications 1 a 13, ***caractérisé en ce qu*** 'une unité de commande (22) est inséré entre l'élément d'éclairage (10) et les moyens de liaison (11).

15. Dalle d'éclairage selon la revendication 14, ***caractérisé en ce que*** l'unité de commande (22) comprend un microcontrôleur programmable.

16. Dalle d'éclairage selon la revendication 14 ou 15, ***caractérisé en ce qu*** 'un dispositif de communication sans fil et l'unité de capteur (33) est relié a l'unité de commande (22).

17. Dalle d'éclairage selon la revendication 16, ***caractérisé en ce que*** le dispositif de communication sans fil et l'unité de capteur (33) f comprend une d'un groupe constitué d'une unité de réception basé sur des fréquences radioélectriques, une unité Bluetooth, une unité Zigbie.

18. Dalle d'éclairage selon l'une des revendications 1 a 17, ***caractérisé en ce que*** l'élément d'éclairage (10) comprend au moins une diode électroluminescente (23).

19. Dalle d'éclairage selon la revendication 18, ***caractérisé en ce que*** les éléments d'éclairage (10) sont constitués de diodes électroluminescentes (23) ayant une forme et une taille permettant qu'elles soient reliées entre elles mosaïque.
